# EUROPEAN PATENT APPLICATION

(11) **EP 2 805 904 A1**
(43) Date of publication of application: **26.11.2014**
(21) Application number: 13169146.1
(22) Date of filing: 24.05.2013
(51) Int. Cl.: B65G 63/00, B65G 67/60, B66C 13/48, B66C 19/00, G06Q 10/08

(54) **Method and system for predicting working progress of a gantry crane**

(71) Applicant: ABB Technology AG, 8050 Zürich (CH)
(72) Inventor: Henriksson, Björn, 723 55 Västeras (SE); Norén, Henrik, 722 19 Västeras (SE); Rode, Manfred, 69168 Wiesloch (DE); Saliba, Sleman, 69115 Heidelberg (DE); Israelsson, Stefan, 724 82 Västeras (SE); Schmitt, Susanne, 69198 Schriesheim (DE)
(74) Representative: Kock, Ina

(57) **Abstract**

The invention is related to method for predicting working progress of a gantry crane (12, 42, 76a-e) by use of a control unit (66, 74a-e), characterized by the following steps:
● providing model data to the control unit (66, 74a-e) describing respective physical properties of the gantry crane (12, 42, 76a-e),
● providing data of a transportation task for the gantry crane (12, 42, 76a-e) to the control unit (66, 74a-e), comprising data of at least one container (16, 18, 64) to be transported by the gantry crane (12, 42, 76a-e) from a respective start location (20, 52) to a respective target location (22, 54) and the respective coordinates,
● splitting the transportation task into a sequence of sub-tasks (24, 26, 28; 56, 58, 60),
● determining the required time for each sub-task (24, 26, 28; 56, 58, 60), wherein at least for the time of one sub-task (24, 26, 28; 56, 58, 60) the physical properties of the gantry crane (12, 42, 76a-e) are taken into account,
● adding the times for the sub-tasks (24, 26, 28; 56, 58, 60) together and providing the sum of time to an output channel of the control unit (66, 74a-e).

The invention is also related to a system for predicting working progress of a gantry crane and a transportation system for loading and unloading containers.

## Description

The invention relates to a method for predicting working progress of a gantry crane by use of a control unit.

It is known that containers are used for transportation of goods worldwide. Due to their standardized and stackable shape, containers are suitable to be transported as well by ships, by trucks or by trains. Long distance transports usually are done with container ships, whereas the transportation of the containers from their origin to the harbour respectively from the harbour to their destination is mainly done with trucks or trains.

Thus respective container terminals in harbours have to provide a loading and unloading system for containers. Base of such systems are the ship-to-shore (STS) cranes that's task is to load and discharge ships, i.e. they move the containers between the ships and the quay. Further a horizontal transportation system is foreseen to move the containers along the quay inbetween different working spaces of different cranes. The STS cranes are usually of the type of a gantry crane and (at least partially) operated by human crane drivers. Typically a terminal operating system (TOS) is foreseen, which generates for each STS crane a list of jobs, respectively transportation tasks, that have to be executed by the crane drivers. These job lists include the sequence, types of jobs as well as pickup and set-down positions on the ship and on the quay.

In order to coordinate the work orders for the STS cranes with the horizontal transport system and automatic stacking cranes (ASC), the TOS predicts the work progress of the STS cranes, i.e. it estimates the finishing times for the upcoming STS crane jobs. At the moment, this work progress prediction simply uses a constant time for all STS jobs.

Disadvantageously within this state of the art is, that these constant times do not reflect reality very well and the STS job durations may vary widely. Based on this state of the art it is the objective of the invention to provide a method to predict the required time for a transportation task respectively an STS job in a more precise way.

This problem is solved by the method of the aforementioned kind. This is characterized by the following steps:
- providing model data to the control unit describing respective physical properties of the gantry crane,
- providing data of a transportation task for the gantry crane to the control unit, comprising data of at least one container to be transported by the gantry crane from a respective start location to a respective target location and the respective coordinates,
- splitting the transportation task into a sequence of sub-tasks,
- determining the required time for each sub-task, wherein at least for the time of one sub-task the physical properties of the gantry crane are taken into account,
- adding the times for the sub-tasks together and providing the sum of time to an output channel of the control unit.

Basic idea of the invention is that the crane work progress prediction will be based on physical properties of the crane movements which enable to reflect different physical features of the work orders. Especially these physical properties respectively features cannot be accessed directly by the TOS. According to the invention those individual data are considered in the determination of the time of the respective transportation task so that the result will be more accurate. The result is foreseen to be provided to the TOS, so that the TOS has more precise data for overall coordination of all transportation tasks. Of course it is also possible to provide the result to other systems in the terminal, such as to the automatic stacking cranes for example.

The physical model of the crane might also contain information about relevant data or events related to picking up and landing the container, container identification and lashing procedures, the optimal container movement trajectory (which depends on the container position on the ship, obstacles in the way, container weight and size, etc.), locking and releasing the containers on the ship, all relevant parameters of the crane and its controls, gantry movements and deck opening/closing operations. The physical model also might contain information about different crane speeds for moving containers above and below deck of a containership. Also, moving the empty spreader to get to the starting position of the next move should be included as part of the physical model.

Hence the physical model captures all relevant influences on the work order execution time that can be extracted from the given work order and the actual container distribution on the ship. A better STS work progress prediction enables an improved container terminal operation since the horizontal transport system can be better coordinated with the STS cranes. This improved coordination pulls STS and ASC operation closer together as follows.

For discharged containers the arrival times in the sea-side transfer zones of the container blocks are known more accurately, so that the ASCs can pick them up as soon as they arrive. For containers planned for loading the time when they are needed in the sea-side transfer zone of the block can also be estimated more accurately. This means in particular that delays in the STS operation can be recognized early so that the ASC coordination can decide appropriate pre-fetching or re-handling actions. On the whole, an improved STS work progress prediction will reduce waiting times and congestions in the transfer zones.

Thus an improved overall coordination of all transportation task over the whole container terminal is achieved in an advantageous way.

In a further embodiment of the invention a single transportation task includes the transport of at least two containers in a sequence and/or at least two containers synchronously. Thus the prediction of the working time of a transportation task for a sequence of several containers together reduces the communication effort inbetween the control unit and a superordinate TOS in an advantageous way therewith without reducing accuracy of predicting the required time. The same advantage is gained in case of a synchronous handling of two containers by the crane, for example by use of a double gripper.

However, the work completion times for the respective transportation tasks are also influenced by dynamic external sources such as varying crane driver performances or weather conditions. Therefore according to another embodiment of the invention data about varying frame conditions having influence on the transportation task are provided to the control unit and are considered at least in part for the determination of the times of the sub-tasks respectively the sum of time. Those frame conditions are typically related to the gantry crane itself and not necessarily considerable by a superordinate TOS. Thus the prediction of the working progress of a crane is refined by using crane-individual data in an advantageous way. This can be seen as kind of dynamic prediction system.

Such varying frame conditions could comprise for example data about wind conditions: with increasing wind speed the maximum movement speed of a container is reduced and the transportation time increased. In case that a container is loaded to or unloaded from a ship the deck cover conditions on the ship have influence. In case that the gantry crane is operated by a human person the grade of experience of the crane driver also has influence, since a more experienced crane driver probably will need less time for a transportation task. Congestion times caused by a supply system for the containers to the respective start location or respective changes within the transportation task will also influence the required time in a negative way.

According to a further embodiment of the invention the time required for a real transportation task in execution is measured wherein the frame data of the transportation task and the measured respective required time are provided to a database and stored therein. The database can be located for example in a memory of the control unit. Thus real data about the duration of a real transportation task is collected and is building a base to refine the determination of the duration of a comparable transportation task.

According to the invention such a refinement can be done by comparing a respective determined sum of time with a time stored within the database having same or at least similar frame data. Thus a direct comparison inbetween a theoretical calculated sum of time and a belonging real measured sum of time is gained, whereas in the ideal case both values should be identical or better to say the theoretical value should be as close as possible to the real value.

According to an embodiment of the invention the result of the comparison is used to adapt the determined sum of time directly and/or is provided to a learnable system. The adaptation can be done by applying a correction factor of that kind, that for example an average value from theoretical and real sum of time is build.

Furthermore it is also within the scope of the invention to provide the result of the comparison to a learnable system, which in the end is foreseen to become trained with those data. A suitable learnable system is for example a Kalman filter, an artificial neural network, an Expert system or based on Fuzzy logic. In the trained state a learnable system is able to build a relationship between its input parameters and respective output parameters.

According to an embodiment of the invention the already trained learnable system is foreseen to determine a correction factor so that applying the correction factor on a respective determined sum of time brings the result closer to the real required time. It is as well possible to determine the required time for a sub-task directly from the output of a learnable system.

The problem of the invention is also solved by a system for predicting working progress of a gantry crane comprising a control unit which is foreseen to perform the method according to the invention. A control unit comprises calculation capability and is in principle comparable with a personal computer. The control unit is dedicated to a gantry crane and is preferably mounted thereon, for example within the cabin for the crane driver. Preferably the control unit is moveable together with the gantry crane. This has the advantage that crane-related data can easily be gained by respective sensors mounted on the crane for example and directly supplied to the control unit.

The objective of the invention is also solved by a transportation system for loading and unloading containers, comprising at least a gantry crane for the handling of the containers, a superordinate control unit for coordinating transportation tasks and a system according to the invention, which is foreseen to receive data of respective transportation tasks from the superordinate control unit and provide a respective determined sum of time back thereto. The advantages of such a system have already explained within the description of the method.

Further advantageous embodiments of the invention are mentioned in the dependent claims.

The invention will now be further explained by means of an exemplary embodiment and with reference to the accompanying drawings, in which:
- Figure 1: shows first exemplary transportation system for loading and unloading containers,
- Figure 2: shows second exemplary transportation system for loading and unloading containers and
- Figure 3: shows the structure of exemplary transportation system.

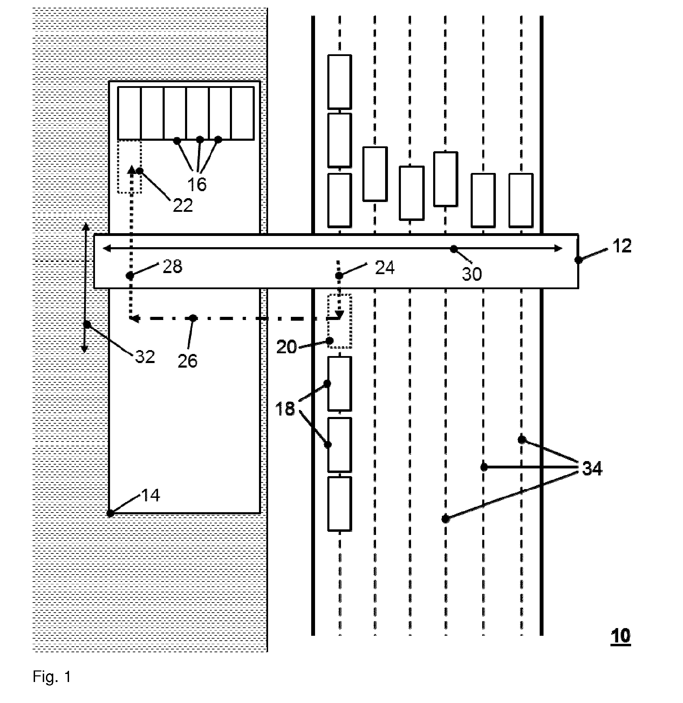

Fig. 1 shows a first exemplary transportation system for loading and unloading containers from a birds view 10. A gantry crane 12 is extending over a loading zone on a quay and over a ship 14 which is anchoring nearby. In the loading zone a horizontal supply system 34 for containers is foreseen, in this case some railway tracks, wherein of course also trucks can enter the loading zone. On one of the railway tracks a queue of containers 18 is indicated, which are foreseen to be loaded on the ship 14. The crane 12 provides in total three degrees of freedom in movement and can move along the quay as indicated with the arrow 32. At the top of the crane 12 a non-shown trolley is foreseen, which can move perpendicular thereto as indicated with the arrow 30. Attached to the trolley is a liftable gripper tool for containers, so that in total three degrees of freedom in movement are available for loading or unloading a container.

The ship 14 has already loaded containers 16 on board. Another container 20, which is on the quay in the loading zone, is foreseen to be transported to its target location 22 on the ship 14. For this transportation task the crane 12 has first to move along the arrow 24 to a position, where the gripper tool can grab the container 20. In a next transportation sub-task the container is lifted up. When lifted up the container is moved along the arrow 26 across the loading zone and the ship 14. Afterwards the gantry crane 12 moves along the arrow 28 and the container is lowered down to its target location 22.

Thus a number of sub-tasks for the transportation of the container is defined. The time required for the sub-tasks can be more precisely calculated when taking into account the physical properties of the crane such as maximum movement speed dependent on wind speed or weight of the container or such. Of course also the time for tasks, which are not subject to a movement as such, have to be taken into account, for example fixing the container or such. Adding the times of the determined time need for all sub-tasks, a more precise result for the time need of the whole transportation task is gained.

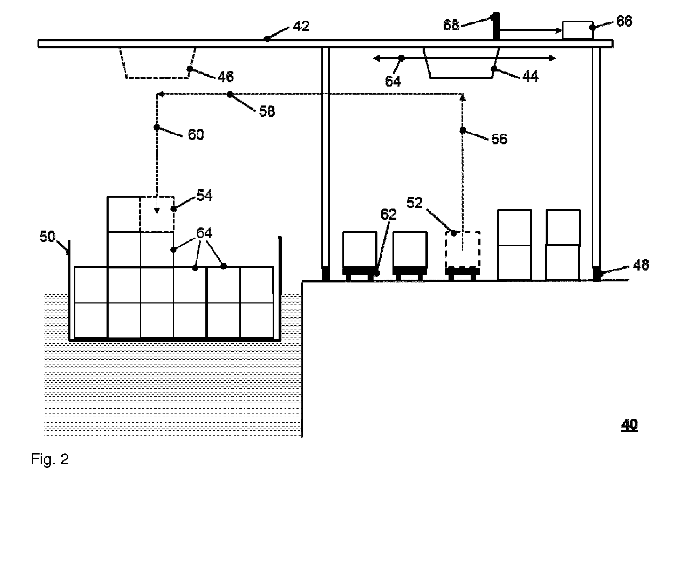

Figure 2 shows a first exemplary transportation system for loading and unloading containers from a side view 14. A gantry crane 42 is extending over a loading zone on a quay and over a ship 50 which is anchoring nearby. In the loading zone containers are indicated either on a stack or on container wagons 62. The gantry crane 42 is foreseen with wheels 48 and a respective drive, so that he can move along the quay in parallel to the ship 50. On top of the bridge-like gantry crane 42 a trolley 44 is foreseen, which can be moved across over the loading zone and across over the ship 50 so that containers, which are lifted up from the loading zone can be lowered down on the ship after a respective slide movement of the trolley 44, which is shown in a second position over the ship 50 with reference number 46.

A container 22 on a container wagon in the loading zone is foreseen to be transported to its target location 54 on a stack of already loaded containers 64. For this transportation task several sub-tasks 56, 58, 60 are foreseen as indicated with the respective arrows, namely lifting up, slide movement with the trolley and lowering down.

On top of the crane a control unit 66 is indicated. Such a control unit 66 is typically foreseen as interface to a superordinate control unit, which controls several cranes. So the control unit 66 is receiving for example a list of transportation tasks from the superordinate control unit and is confirming the actual status of work back. Furthermore the control unit is foreseen to provide crane-specific data, for example dimensions or physical properties. The control unit 66 is also foreseen to gather varying crane-specific data, for example the actual wind speed by use of a wind sensor 68, which is also mounted on top of the crane 42. Those data are required for the execution of the method according to the invention, which is typically implemented as software program product running on the control unit 66.

The control unit 66 is in addition foreseen as interface to control elements for the crane driver and for coordination of the different drives of the gantry crane. In case of an optional database this is preferably also stored thereon. But it is also possible to store such a database for example centrally on the superordinate control unit.

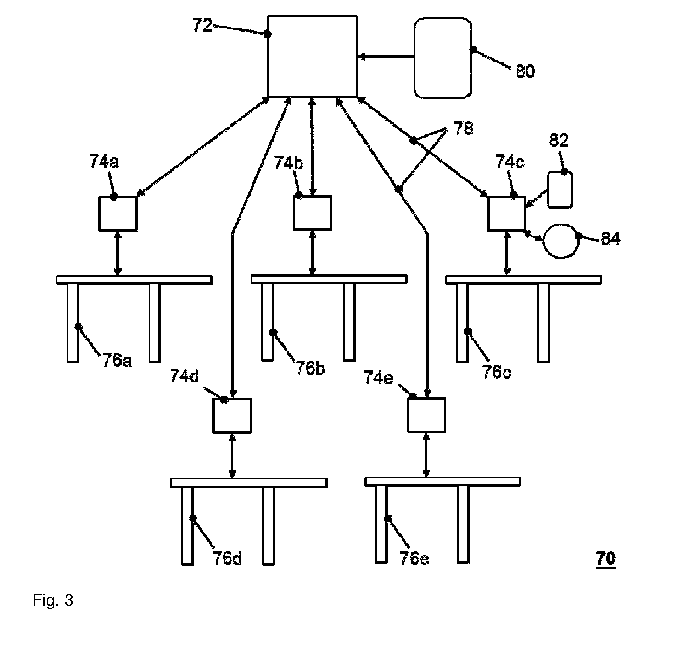

Figure 3 shows the structure of exemplary transportation system in a sketch 70. A superordinate control unit 72 is connected to several crane-related control units 74a - e by bidirectional communication lines 78. The control units 74a - e on their part are controlling respective dedicated gantry cranes 76a - e. Each of the control units 74a - e is supplied with data 82 about varying frame conditions and is connected to a database respectively a learnable system 84. The superordinate control system 80 is supplied with overall container transportation data 80 for the whole transportation system. Based on those data different transportation tasks are determined and distributed to different gantry cranes for further execution. To make the system as effective as possible the control units reply an estimated time for each transportation task which has been assigned to them so that the planning of the superordinate control system can be optimized based on those data.

**List of reference signs**

| | |
|---|---|
| 10 | first exemplary transportation system for loading and unloading containers |
| 12 | exemplary gantry crane |
| 14 | exemplary container ship |
| 16 | containers on ship |
| 18 | containers in loading zone |
| 20 | exemplary container at start location |
| 22 | target location of exemplary container |
| 24 | first sub-task of exemplary transportation task |
| 26 | second sub-task of exemplary transportation task |
| 28 | third sub-task of exemplary transportation task |
| 30 | moving direction of crane trolley |
| 32 | moving direction of gantry crane |
| 34 | supply system for containers |
| 40 | second exemplary transportation system for loading and unloading containers |
| 42 | exemplary gantry crane |
| 44 | crane trolley in first position |
| 46 | crane trolley in second position |
| 48 | wheels of gantry crane |
| 50 | exemplary container ship |
| 52 | exemplary container at start location |
| 54 | target location of exemplary container |
| 56 | first sub-task of exemplary transportation task |
| 58 | second sub-task of exemplary transportation task |
| 60 | third sub-task of exemplary transportation task |
| 62 | container waggon |
| 66 | exemplary control unit |
| 68 | wind sensor |
| 64 | containers on ship |
| 70 | structure of exemplary transportation system |
| 72 | superordinate control unit |
| 74a-e | control units |
| 76a-e | gantry cranes |
| 78 | communication lines |
| 80 | overall container transportation data |
| 82 | data about varying frame conditions |
| 84 | database / learnable system |

## Claims

1. Method for predicting working progress of a gantry crane (12, 42, 76a-e) by use of a control unit (66, 74a-e), **characterized by** the following steps:
• providing model data to the control unit (66, 74a-e) describing respective physical properties of the gantry crane (12, 42, 76a-e),
• providing data of a transportation task for the gantry crane (12, 42, 76a-e) to the control unit (66, 74a-e), comprising data of at least one container (16, 18, 64) to be transported by the gantry crane (12, 42, 76a-e) from a respective start location (20, 52) to a respective target location (22, 54) and the respective coordinates,
• splitting the transportation task into a sequence of sub-tasks (24, 26, 28; 56, 58, 60),
• determining the required time for each sub-task (24, 26, 28; 56, 58, 60), wherein at least for the time of one sub-task (24, 26, 28; 56, 58, 60) the physical properties of the gantry crane (12, 42, 76a-e) are taken into account,
• adding the times for the sub-tasks (24, 26, 28; 56, 58, 60) together and providing the sum of time to an output channel of the control unit (66, 74a-e).

2. Method according to claim 1, **characterized in that** a single transportation task includes the transport of at least two containers (16, 18, 64) in a sequence and/or at least two containers (16, 18, 64) synchronously.

3. Method according to claim 1 or 2, **characterized in that** data about varying frame conditions having influence on the transportation task are provided to the control unit (66, 74a-e) and are considered at least in part for the determination of the times of the sub-tasks (24, 26, 28; 56, 58, 60) respectively the sum of time.

4. Method according to claim 3, **characterized in that** the data about varying frame conditions comprise data about:
● wind conditions,
● in case that a container is loaded from or unloaded from a ship (14, 50) the deck cover conditions on the ship,
● in case that the gantry crane (12, 42, 76a-e) is operated by a human person the grade of experience of the crane driver,
● congestion times caused by a supply system (34) for the containers (16, 18, 64) to the respective start location (20, 52) or
● respective changes within the transportation task.

5. Method according to any of the previous claims, **characterized in that** the time required for a real transportation task in execution is measured wherein the frame data of the transportation task and the measured respective required time is provided to a database and stored therein.

6. Method according to claim 5, **characterized in that** a respective determined sum of time is compared with a time stored within the database having same or at least similar frame data.

7. Method according to claim 6, **characterized in that** the result of the comparison is used to adapt the determined sum of time directly and/or provided to a learnable system.

8. Method according to claim 7, **characterized in that** the learnable system is foreseen to determine a correction factor so that applying the correction factor on a respective determined sum of time brings the result closer to the real required time.

9. System for predicting working progress of a gantry crane comprising a control unit (74a-e) which is foreseen to perform the method according to any of the claims 1 - 8.

10. Transportation system for loading and unloading containers, comprising at least a gantry crane (12, 42, 76a-e) for the handling of the containers (16, 18, 64), a superordinate control unit (72) for coordinating transportation tasks and a system according to claim 9, which is foreseen to receive data of respective transportation tasks from the superordinate control unit (72) and provide a respective determined sum of time back thereto.
